# EUROPEAN PATENT APPLICATION

(11) **EP 4 067 144 A1**
(43) Date of publication of application: **05.10.2022**
(21) Application number: 22166589.6
(22) Date of filing: 04.04.2022
(51) Int. Cl.: B60K 7/00, B62D 11/00, B60B 33/00

(54) **MOTORISED DRIVE UNIT WITH AN INTEGRATED STEERING**

(30) Priority: 02.04.2021 IT 202100008348
(71) Applicant: Kelvin S.r.l., 21010 Besnate (VA) (IT)
(72) Inventor: Neri, Davide, 21010 Besnate (VA) (IT)
(74) Representative: Petraz, Davide Luigi

(57) **Abstract**

Motorized rotating unit (10) comprising a support structure (12), a wheel (13) mounted rotatable with respect to the support structure (12), an electric motor (16) mounted on the support structure (12) and connected to the wheel (13) in order to make it selectively rotate and an electrical connection device (33) configured to power the electric motor (16).

## Description

### FIELD OF THE INVENTION

The present invention concerns a motorized rotating unit for vehicles used, for example but not exclusively, in the field of moving and handling materials in warehouses or industrial plants, even highly automated ones. Such vehicles can be, preferably but not exclusively, of the type with automatic control, remote-controlled, laser-guided and/or self-driving without a driver.

### BACKGROUND OF THE INVENTION

Vehicles of the type with automatic control, remote-controlled, laser-guided and/or self-driving without a driver are known, used, for example, in the field of moving, handling and transporting materials in warehouses or in industrial plants, even highly automated ones, which in this specific field are denominated by the acronyms "AGV" (Automated Guided Vehicles) or "LGV" (Laser Guided Vehicles).

Currently, the market requires that such vehicles are increasingly agile and capable of performing complex maneuvers in confined spaces, in order to optimize both the spaces of the place where they operate and also the flow of the materials they transport.

One known solution, which allows to optimize the maneuvering space of such vehicles, is to equip them with motorized rotating units which integrate both an electric motor for traction of the vehicle and also a steering device which modifies its direction.

Generally, the known types of motorized rotating units each comprise a fixed structure, integral with the frame of the vehicle, and a support structure, pivoted to the fixed structure and on which a traction and steering wheel is, in turn, mounted rotatable.

In particular, a motorized rotating unit is known, also called "vertical motorized wheel", in which a first electric motor, dedicated to traction, is mounted on the fixed structure and is disposed orthogonally to the axis of rotation of the wheel to which it transfers the drive torque by means of a mechanical transmission. The steering device comprises a toothed crown attached to the support structure and a second electric motor mounted on the fixed structure and which rotates a pinion meshed with said toothed crown.

One disadvantage of this known motorized rotating unit is that it is particularly bulky, especially in height, so that it is not suitable for installation in vehicles which have to have a certain overall height from the ground.

Document JP S60 135323 A is also known, which describes a motorized rotating unit, called "horizontal motorized wheel", in which the first electric motor for traction is attached to the support structure and is coaxial to the wheel. In this case, the second electric motor for steering is also disposed on the support structure, while the toothed wheel is attached to the fixed structure, so that, during steering, both the traction motor and also the steering motor rotate together with the support structure.

This last known motorized rotating unit, even if it allows to produce vehicles with a reduced overall height, compared to the previous type, has the disadvantage that it has very limited steering angles due to the fact that the cables that power the two electric motors are subjected to considerable mechanical stresses during steering and, over time, tend to be damaged and even break. Moreover, the very limited steering angles require a much larger maneuvering space for the maneuvers of the vehicle.

Another disadvantage, common to both of said known rotating units, is that they need a command circuit to manage the motors, which comprises at least two inverters and also a plurality of sensors necessary for the automated guide of the vehicle on which the rotating units are mounted.

The command circuit, in general, is autonomous and separate from the motorized rotating unit and it is disposed on the vehicle on which the motorized rotating unit is mounted and requires long operations for wiring and connection with the latter. Furthermore, the command circuit usually occupies a space which could instead be used for loading objects onto the vehicle. It should be noted that this disadvantage is also present in non-steering motorized rotating units.

There is therefore a need to provide a new and original motorized rotating unit which can overcome at least one, better all, of the disadvantages of the state of the art.

One purpose of the present invention is to provide a motorized rotating unit which simplifies the wiring and connection operations between it and the vehicle in which it will be disposed, as well as the operations for fine tuning the vehicle on which the motorized rotating unit is mounted.

Another purpose of the present invention is to provide a motorized rotating unit which is compact and has limited overall sizes, in particular a limited height from the ground.

Another purpose of the present invention is to provide a motorized rotating unit which is simple and reliable, and which allows to perform, in limited spaces, maneuvers that require high steering angles.

The Applicant has devised, tested and embodied the present invention to overcome the shortcomings of the state of the art and to obtain these and other purposes and advantages.

### SUMMARY OF THE INVENTION

The present invention is set forth and characterized in the independent claim. The dependent claims describe other characteristics of the present invention or variants to the main inventive idea.

In accordance with the above purposes, a motorized rotating unit, which overcomes the limits of the state of the art and eliminates the defects present therein, comprises a support structure, a wheel mounted rotatable about an axis of rotation with respect to the support structure, a first electric motor mounted on the support structure and connected to the wheel in order to make it selectively rotate, and electrical connection means configured to receive electrical energy and/or electrical signals from one or more external sources.

According to one aspect of the present invention, the motorized rotating unit also comprises a control circuitry attached to the support structure, electrically connected to the electrical connection means and at least to the first electric motor, and configured to receive the electrical energy and/or the electrical signals from the one or more external sources through the electrical connection means and to manage the power delivered at least to the first electric motor in order to move the motorized rotating unit on the basis of the electrical signals.

The electrical signals can be correlated to the rotation speed required from the first electric motor and/or to a steering angle required from the second electric motor.

According to another aspect of the present invention, the control circuitry comprises at least one interconnection unit connected to the electrical connection means and configured to process the electrical signals; a first power control unit, comprising an inverter, connected to the interconnection unit and to the first motor and configured to power the latter on the basis of the electrical signals processed by the interconnection unit; and a first sensor associated with the first electric motor, connected to the interconnection unit and configured to transmit to the latter the functioning parameters of the first motor. The functioning parameters of the first motor can comprise at least its rotation speed.

In one embodiment, the motorized rotating unit also comprises a fixed structure, and the support structure is mounted rotatable about a steering axis with respect to the fixed structure.

According to another aspect of the present invention, the electrical connection means comprise a first connection member mounted on the fixed structure, and a corresponding second connection member mounted on the support structure and electrically connected, in a sliding manner, to the first connection member.

Advantageously, in this way, the support structure, the first electric motor and the associated wheel can rotate about the steering axis by any angle, even completing one or more revolutions.

According to another aspect of the present invention, the first connection member is aligned with the second connection member along the steering axis.

According to another aspect of the present invention, the first connection member comprises one or more annular connection tracks and the second connection member comprises one or more sliding elements, each one in contact with a respective annular connection track.

According to another aspect of the present invention, the support structure comprises a seating for the second connection member and a channel connects the latter with the outside of the support structure.

According to another aspect of the present invention, the motorized rotating unit also comprises connection means to rotatably connect the support structure to the fixed structure and comprising at least a first annular element attached to the fixed structure and a second annular element attached to the support structure. Furthermore, the first annular element and the second annular element are aligned along the steering axis.

According to another aspect of the present invention, the motorized rotating unit also comprises a steering device having a second electric motor disposed on the support structure and configured to make a pinion rotate that meshes with a toothed crown attached to the fixed structure.

According to another aspect of the present invention, the control circuitry also comprises a second power control unit, comprising an inverter, connected to the interconnection unit and to the second motor and configured to power the latter on the basis of the signals processed by the interconnection unit, and a second sensor associated with the first electric motor, connected to the interconnection unit and configured to transmit to the latter the functioning parameters of the second electric motor. The functioning parameters of the second motor comprise at least the extent of each rotation it performs with respect to a respective reference angle or point.

According to another aspect of the present invention, at least part of the control circuitry is contained in a box-like element attached to the support structure.

### DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a three-dimensional view of a motorized rotating unit according to a first embodiment of the present invention;
- fig. 2 is a section view of the motorized rotating unit of fig. 1;
- fig. 3 is a detail of fig. 2 on an enlarged scale;
- fig. 4 is a schematic representation of a part of the motorized rotating unit of fig. 2;
- fig. 5 is a three-dimensional view of a motorized rotating unit according to a second embodiment of the present invention;
- fig. 6 is a schematic representation of a part of the motorized rotating unit of fig. 5.

We must clarify that in the present description and in the claims the term vertical, with its declinations, has the sole function of better illustrating the present invention with reference to the drawings and must not be in any way used to limit the scope of the invention itself, or the field of protection defined by the attached claims. For example, by the term vertical we mean an axis, or a plane, that can be either perpendicular to the line of the horizon, or inclined, even by several degrees, for example up to 20°, with respect to the latter.

Furthermore, the people of skill in the art will recognize that certain sizes or characteristics in the drawings may have been enlarged, deformed, or shown in an unconventional or non-proportional way in order to provide a version of the present invention that is easier to understand. When sizes and/or values are specified in the following description, the sizes and/or values are provided for illustrative purposes only and must not be construed as limiting the scope of protection of the present invention, unless such sizes and/or values are present in the attached claims.

To facilitate comprehension, the same reference numbers have been used, where possible, to identify identical common elements in the drawings. It is understood that elements and characteristics of one embodiment can conveniently be incorporated into other embodiments without further clarifications.

### DESCRIPTION OF SOME EMBODIMENTS OF THE PRESENT INVENTION

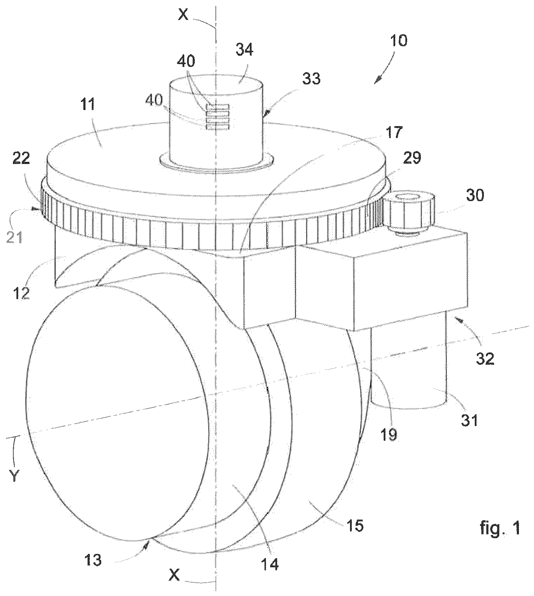

With reference to fig. 1, a motorized rotating unit 10 in accordance with a first embodiment of the present invention comprises a fixed structure 11 which is suitable to be attached to the bodywork and/or chassis of an external vehicle, of any known type whatsoever or which will be developed in future, not shown in the drawings.

The fixed structure 11, which in the example provided here comprises, or consists of, a circular metal plate, configured to be attached to the vehicle by means of any known attachment mean whatsoever, for example by means of bolts.

In other embodiments, not shown in the drawings, the fixed structure 11 can itself be part of the vehicle's bodywork and/or chassis.

The motorized rotating unit 10 also comprises a support structure 12 which is mounted rotatable about a steering axis X, with respect to the fixed structure 11. A wheel 13 is mounted rotatable with respect to the support structure 12, about an axis of rotation Y perpendicular to the steering axis X.

For example, the wheel 13 comprises a body 14, which acts as a rim, and a tire 15 mounted on the body 14.

On the support structure 12 there is also mounted a first electric motor 16 mechanically connected to the body 14 of the wheel 13 in order to make it selectively rotate.

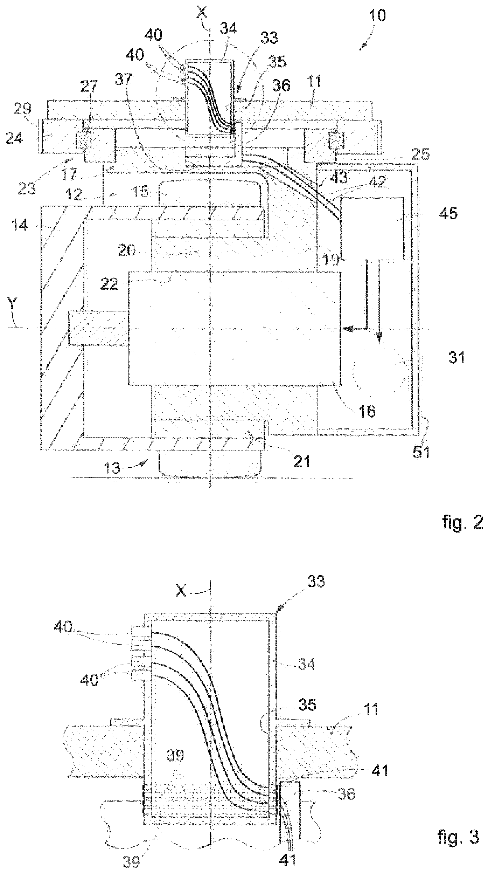

In particular, in the embodiment shown here, the support structure 12 substantially has the shape of an inverted L, with an upper portion 17 (fig. 2) substantially facing and parallel to the fixed structure 11, and a lower portion 19 which develops downward from the upper portion 17 and perpendicularly thereto.

In other alternative embodiments, not shown in the drawings, the support structure 12 can also have another shape, for example the shape of a straight or inverted U.

The lower portion 19 of the support structure 12 comprises, or supports, a hub 20 coaxial to the axis of rotation Y and on the cylindrical surface of which there is rotatably mounted the body 14 of the wheel 13, possibly with a first bearing 21 interposed.

The hub 20 is provided with an axial cylindrical cavity 22, which acts as a seating for the first electric motor 16.

In this embodiment, the rotating shaft of the first electric motor 16 is connected directly to the body 14 of the wheel 13.

In other embodiments, not shown in the drawings, a speed reducer can be disposed between the rotating shaft of the first electric motor 16 and the body 14 of the wheel 13.

The connection between the support structure 12 and the fixed structure 11 is made by means of connection means 23, which in the example provided here comprise a first ring 24 attached to the fixed structure 11 and a second ring 25 attached to the support structure 12, both rings 24, 25 being coaxial to the steering axis X. Preferably, the second ring 25 is inserted inside the first ring 24 and a second bearing 27 is interposed between them, which is of the type suitable to also support an axial thrust, parallel to the steering axis X.

In other embodiments, not shown in the drawings, the first ring 24 and/or the second ring 25 can be made in a single body with the fixed structure 11 and with the support structure 12, respectively.

The motorized rotating unit 10 also comprises a steering device 32, which comprises a toothed crown 29, or circular rack, attached to the fixed structure 11, and a pinion 30 meshed with the latter and attached onto the shaft of a second electric motor 31, both mounted on the support structure 12.

The toothed crown 29 can be either made directly on the external perimeter of the first ring 24, or externally attached to the latter.

Please note that, in this configuration, both the first electric motor 16 and also the second electric motor 31 are advantageously disposed on the support structure 12, so that the overall height of the motorized rotating unit 10 from the ground S is considerably contained.

The motorized rotating unit 10 also comprises an electrical connection device 33, which, in this first embodiment, in turn comprises a first part 34, mounted in a seating 35 present on the fixed structure 11, and a corresponding second part 36, electrically connected, in a sliding manner, to the first part 34 and mounted in a second seating 37 present on the support structure 12. The two parts 34 and 36 are coaxial to the steering axis X.

In other embodiments, not shown in the drawings, the electrical connection device 33 can comprise a disc-shaped, rotatable electrical collector, also known by the term "slip ring".

Advantageously, in this way, the support structure 12, the first electric motor 16, the associated wheel 13 and the second electric motor 31 can rotate by any angle whatsoever about the steering axis X, while keeping the overall height of the entire motorized rotating unit 10 reduced.

In the embodiment described here, the first part 34 of the connection device 33 comprises a cylindrical body having a plurality of annular connection tracks 39 (fig. 3) which are electrically connected to one or more connectors 40 in order to receive electrical energy and/or electrical signals from one or more external sources, such as, for example, an autonomous driving system of the vehicle.

The connectors 40 can comprise both connectors for the transmission of electric power, and also data communication buses.

This configuration is particularly advantageous in that, in order to electrically connect the motorized rotating unit 10 to the one or more external sources, it is sufficient to connect the connectors 40 to respective electric cables suitable to transmit both supply power and also electrical command signals for the two electric motors 16 and 31. This simplifies the mounting of the motorized rotating unit 10 and improves its integration with the remaining part of the vehicle, without requiring long, complicated and expensive wiring operations.

The second part 36 of the connection device 33 comprises a plurality of sliding elements 41, each of which is permanently in contact with a respective annular connection track 39.

The electrical connection device 33 can comprise standardized field buses, CAN, EtherCAT to allow communication and data transmission with the external sources comprised in the vehicle to which the motorized rotating unit 10 will be attached. For example, the external sources can comprise a central control unit of the vehicle configured to generate electrical signals correlated to, for example, the rotation speed required from the first electric motor 16 and/or a determinate steering angle required from the second electric motor 31. Such electrical signals can be generated on the basis of a path or trajectory required from the vehicle.

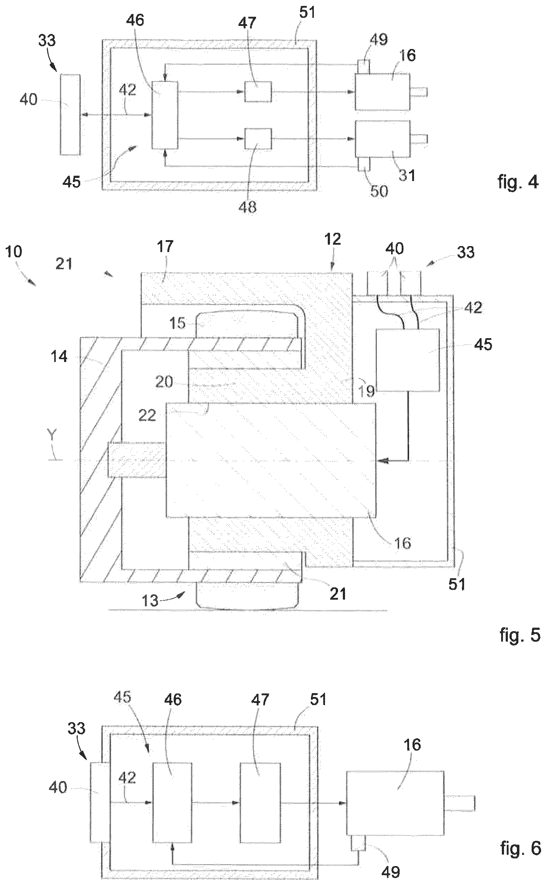

According to one aspect of the present invention, the motorized rotating unit 10 also comprises a control circuitry 45 attached to the support structure 12 and comprising at least one interconnection unit 46, at least one power control unit 47, 48 and a sensor 49, 50 (fig. 4).

The interconnection unit 46 is connected to the connection device 33 and is configured to receive from the latter the electrical energy and/or electrical signals coming from the one or more external sources.

In particular, in this first embodiment, an electric cable 42 (fig. 2), partly housed in a through hole 43 of the support structure 12, electrically connects the sliding elements 41 to the interconnection unit 46.

The interconnection unit 46 is also electrically connected to the at least one power control unit 47, 48 (fig. 4).

In particular, in the example given here, the control circuitry 45 comprises two power control units 47 and 48, each connected to a respective electric motor 16, 31 and configured to manage the power supply delivered to the latter in order to move the motorized rotating unit 10 on the basis of the electrical signals processed by the interconnection unit 46.

Furthermore, a respective sensor 49, 50 is associated with each motor 16, 31, configured to detect their functioning parameters and transmit them to the interconnection unit 46. These parameters can be, for example, the rotation speed of the first electric motor 16 and/or of the second electric motor 31, as well as the extent of each rotation they perform with respect to a respective reference angle or point.

In fact, the processing performed by the interconnection unit 46 can also occur in feedback with respect to what detected by the sensors 49, 50.

The processing performed by the interconnection unit 46 can comprise, for example, the evaluation of the rotation speed required from the first electric motor 16 by the external sources by means of the electrical signals sent to the electrical connection device 33, and the verification of the current rotation speed of the first electric motor 16. Furthermore, the interconnection unit 46 can also command the first power control unit 47 to increase or decrease the electric power supplied to the first electric motor 16 in order to increase or decrease its rotation speed in such a way as to reach the rotation speed required.

Furthermore, the processing performed by the interconnection unit 46 can comprise, for example, the evaluation of the steering angle required from the second electric motor 31 by the external sources by means of the electrical signals sent to the electrical connection device 33, and the verification of the rotation currently performed by it. Furthermore, the interconnection unit 46 can also command the second power control unit 48 to increase or decrease the electric power supplied to the second electric motor 31 in order to increase or decrease the extent of its rotation in such a way as to reach the steering angle required.

Preferably, at least a part of the control circuitry 45 can be contained in a box-like element 51, which is also attached to the support structure 12.

In some embodiments of the present invention, not shown in the drawings, the power control units 47, 48 can comprise or be connected to an inverter of a known type, which is also disposed for example inside the box-like element 51 and is configured to invert the power supply current to one or both of the electric motors 16, 31.

For example, the first power control unit 47 comprises a first inverter connected to the first electric motor 16, and the second power control unit 48 comprises a second inverter connected to the second electric motor 31.

We must clarify that all the elements comprised in the control circuitry 45 are already electrically connected to each other and configured to communicate with the external sources through the connection device 33.

This is particularly advantageous since the motorized rotating unit 10 according to the present invention does not require complicated wiring operations and/or bulky electrical command panels on board the vehicle which will be equipped with it.

With reference to fig. 4, a second embodiment of the motorized rotating unit 10 according to the present invention comprises all the elements described above except for the fixed structure 11, the connection means 23 and the steering device 32.

In this second embodiment, it is the upper portion 17 (fig. 5) of the support structure 12 that is configured to be attached to the vehicle. In fact, in this second embodiment, the upper portion 17 comprises, or consists of, a metal plate, configured to be attached to the vehicle by means of any known attachment mean whatsoever, for example by means of bolts.

In this second embodiment, the control circuitry 45 is significantly simplified compared to that of the first embodiment and comprises the interconnection unit 46 (fig. 6), only the power control unit 47 and the sensor 49 associated with the first motor 16, that is, the one dedicated to the traction of the vehicle.

Furthermore, the connection device 33 can also be simplified and it can essentially comprise one or more connectors 40 electrically connected to the interconnection unit 46 and attached, for example, onto the box-like element 51.

In one variant of the second embodiment, not shown in the drawings, the first electric motor 16 can be disposed on the upper portion 17 of the support structure 12, substantially perpendicular to the axis of rotation Y, and it can be connected to the wheel 13 by means of a return transmission of a known type.

It is clear that modifications and/or additions of parts may be made to the motorized rotating unit 10 as described heretofore, without departing from the field and scope of the present invention as defined by the claims.

It is also clear that, although the present invention has been described with reference to some specific examples, a person of skill in the art shall certainly be able to achieve many other equivalent forms of motorized rotating unit, all coming within scope of the present invention.

In the following claims, the sole purpose of the references in brackets is to facilitate reading and they must not be considered as restrictive factors with regard to the field of protection defined by the claims.

## Claims

1. Motorized rotating unit (10) comprising a support structure (12), a wheel (13) mounted rotatable about an axis of rotation (Y) with respect to said support structure (12), a first electric motor (16) mounted on said support structure (12) and connected to said wheel (13) in order to make it selectively rotate and electrical connection means (33) configured to receive electrical energy and/or electrical signals from one or more external sources, **characterized in that** it also comprises a control circuitry (45) attached to said support structure (12), electrically connected to said electrical connection means (33) and at least to said first electric motor (16) and configured to receive said electrical energy and/or said electrical signals from said one or more external sources through said electrical connection means (33) and to manage the power delivered at least to said first electric motor (16) in order to move said motorized rotating unit (10) on the basis of said electrical signals.

2. Motorized rotating unit (10) as in claim 1 and wherein said electrical signals are correlated to the rotation speed required from said first electric motor (16), **characterized in that** said control circuitry (45) comprises at least one interconnection unit (46) connected to said electrical connection means (33) and configured to process said electrical signals; a first power control unit (47), comprising a first inverter, connected to said interconnection unit (46) and to said first motor (16) and configured to power the latter on the basis of said electrical signals processed by said interconnection unit (46); and a first sensor (49) associated with said first electric motor (16), connected to said interconnection unit (46) and configured to transmit to the latter the functioning parameters of said first motor (16).

3. Motorized rotating unit (10) as in claim 2, **characterized in that** said functioning parameters of said first motor (16) comprise at least its rotation speed.

4. Motorized rotating unit (10) as in any claim hereinbefore and also comprising a fixed structure (11) and wherein said support structure (12) is mounted rotatable about a steering axis (X) with respect to said fixed structure (11), **characterized in that** said electrical connection means (33) comprise at least one first connection member (34) mounted on said fixed structure (11) and at least one corresponding second connection member (36) mounted on said support structure (12) and electrically connected, in a sliding manner, to said at least one first connection member (34), so that said support structure (12), said first electric motor (16) and the associated wheel (13) can rotate about said steering axis (X) by any angle whatsoever.

5. Motorized rotating unit (10) as in claim 4, **characterized in that** said first connection member (34) and said second connection member (36) are coaxial to said steering axis (X).

6. Motorized rotating unit (10) as in claim 4 or 5, **characterized in that** said first connection member (34) comprises one or more annular connection tracks (39) **and in that** said second connection member (36) comprises one or more sliding elements (41) each in contact with a respective annular connection track (39).

7. Motorized rotating unit (10) as in any claim from 4 to 6, **characterized in that** it also comprises connection means (23) to rotatably connect said support structure (12) to said fixed structure (11) and comprising at least one first annular element (24) attached to said fixed structure (11) and a second annular element (25) attached to said support structure (12), both coaxial to said steering axis (X).

8. Motorized rotating unit (10) as in claim 7, **characterized in that** between said first annular element (24) and said second annular element (25) there is interposed a bearing (27) configured to also support an axial thrust parallel to said steering axis (X).

9. Motorized rotating unit (10) as in any claim from 5 to 8, **characterized in that** it also comprises a steering device (32) configured to rotate said support structure (12) with respect to said fixed structure (11) about said steering axis (X) and comprising a second electric motor (31) disposed in said support structure (12) and configured to make a pinion (30) rotate meshing with a toothed crown (29) attached on said fixed structure (11).

10. Motorized rotating unit (10) as in claim 9 and wherein said electrical signals are correlated at least to a steering angle, **characterized in that** said control circuitry (45) also comprises a second power control unit (48), comprising a second inverter, connected to said interconnection unit (46) and to said second motor (31) and configured to power the latter on the basis of said signals processed by said interconnection unit (46), and a second sensor (50) associated with said second electric motor (31), connected to said interconnection unit (46) and configured to transmit to the latter the functioning parameters of said second electric motor (31).

11. Motorized rotating unit (10) as in claim 10, **characterized in that** said functioning parameters of said second motor (31) comprise at least the extent of each rotation it performs with respect to a respective reference angle or point.

12. Motorized rotating unit (10) as in any claim hereinbefore, **characterized in that** at least part of said control circuitry (45) is contained in a box-like element (51) attached to said support structure (12).

13. Use of a motorized rotating unit (10) as in any claim hereinbefore.
